# EUROPÄISCHE PATENTANMELDUNG

(11) **EP 3 259 989 A1**
(43) Veröffentlichungstag der Anmeldung: **27.12.2017**
(21) Anmeldenummer: 17020338.4
(22) Anmeldetag: 07.08.2017
(51) Int. Cl.: A01N 31/02, A01P 21/00

(54) **KEIMHEMMUNGSMITTEL FÜR KNOLLENPFLANZEN UND MITTEL ZUR REDUZIERUNG DES GEWICHTSVERLUSTES VON KNOLLEN WÄHREND DER LAGERUNG**

(71) Anmelder: Hanisch, Horst, 29584 Himbergen (DE)
(72) Erfinder: Hanisch, Horst, 29584 Himbergen (DE)

(57) **Zusammenfassung**

Die vorliegende Erfindung bezieht sich auf ein Verfahren zur Keimhemmung von Knollen einer Knollenpflanze oder von Zwiebeln, umfassend Aufbringen einer Lösung enthaltend mindestens 60% mindestens eines wasserlöslichen Alkohols auf mindestens eine Knolle oder Zwiebel und entsprechende Verwendungen dieser Lösung.

## Beschreibung

Maßnahmen zur Keimhemmung von Kartoffeln und anderen auf Knollen oder Zwiebeln basierten Gemüsepflanzen sind eine unumgängliche Notwendigkeit zur Qualitätssicherung.

Die natürliche Keimung von Kartoffeln bleibt erst bei Temperaturen unter 2 °C aus. Bei dieser Temperatur entstehen jedoch reduzierende Zucker, die bei zu frittierenden Kartoffeln eine braune Farbe und süßen Geschmack hervorrufen. Die optimale Lagertemperatur zur Vermeidung von Qualitätseinbußen liegt jedoch je nach Sorte und Verwendungszweck bei 5 bis 10 °C. Voraussetzung für eine Lagerung unter diesen Bedingungen ist somit eine künstliche Keimhemmung.

Es ist bekannt, dass sich die Keimung von Kartoffeln während der Lagerung durch Chemikalien hemmen oder gar verhindern lässt. Mit dem chemischen Produkt Ethylen steht ein Pflanzenschutzmittel zur Verfügung, das auf Grundlage einer Zulassung des deutschen Bundesamtes für Verbraucherschutz und Lebensmittelsicherheit für die Keimhemmung von Kartoffeln genutzt werden kann. Breite Anwendung hat dieses Verfahren bislang nicht gefunden.

Die Behandlung von Kartoffeln erfolgt nach der Ernte bei Einlagerung oder nach Lagerbeginn durch Spritzen, durch Stäuben oder durch Anwendung von Heißnebelverfahren. Wichtig ist eine ausreichende Wirkstoffmenge für eine Initialwirkung, wobei eine sortenabhängige Verträglichkeit berücksichtigt werden muss. Eine Zweitbehandlung kann erforderlich werden. Da Pflanzkartoffeln nicht mit dem Keimhemmungsmittel kontaminiert werden dürfen, müssen diese getrennt von den zu behandelnden Kartoffeln gelagert werden.

Von großer praktischer Bedeutung für Kartoffeln sind Keimhemmungsmittel auf Basis des schon seit Jahrzehnten bekannten Wirkstoffs Chlorpropham, siehe z.B. EP1604570. Bei bereits gekeimten Kartoffeln steigt durch Chlorpropham allerdings die Gefahr der Innenkeimung. Einschränkend ist, dass Chlorpropham nur bei konventionell angebauten Kartoffeln, nicht dagegen bei Bioware, verwendet werden darf. Es besteht Kennzeichnungspflicht und die Notwendigkeit einer Rückstandsüberwachung. Beim Verzehr von mit Chlorpropham-Präparaten behandelten Kartoffeln ist zu berücksichtigen, dass Chlorpropham auch in das Innere der Kartoffeln eindringt. Somit reicht ein Waschen oder Schälen zur Entfernung der Substanz nicht aus. Hinsichtlich der Umweltwirkungen ist darauf hinzuweisen, dass Chlorpropham im Erdboden nur mit moderater Geschwindigkeit abgebaut wird. Überdies werden gesundheitsschädliche Wirkungen diskutiert.

Eine Kombinationsbehandlung mit Chlorpropham und Dimethylnaphthalin ist ebenfalls beschrieben, siehe US6,310,004.

Ein neueres Verfahren zur Keimhemmung von Kartoffeln und Zwiebeln wurde mit der Verwendung von Maleinsäurehydrazid als Wirkstoff eingeführt. Maleinsäurehydrazid ist ein bekannter Wirkstoff (für eine Zusammenfassung siehe auch Klein et al., 1984; Journal of Food Biochemistry 8(1); p: 55-66). Die Anwendung von Keimhemmungsmitteln auf Basis von Maleinsäurehydrazid erfolgt durch Spritzapplikation im Freiland.
Bei der Applikation sind einige sehr wichtige Einflussgrößen zu berücksichtigen. So muss zum Zeitpunkt des Einsatzes die Zellteilung der zu behandelnden Knollen oder Zwiebeln abgeschlossen sein. Andernfalls ergeben sich Ertragseinbußen. Da der Wirkstoff über das Blattwerk aufgenommen wird, können nur intakte grüne Bestände behandelt werden. Die Behandlung muss mehrere Wochen vor der Krautabtötung erfolgen. Die Anwendung ist auf Temperaturen unter 25 °C begrenzt. Niederschläge oder Bewässerung sind erst nach 24 h ohne nachteilige Auswirkung. Zu erwähnen ist auch die Rückstandsproblematik.

Eine Wirkung höherer Alkohole auf das Keimungsverhalten ist in DDR Patent 147 039 bzw. in Drauschke et al. (1981; "Untersuchungen zum Einsatz von Nonylalkohol als temporärer Keimungsinhibitor bei Pflanzkartoffeln. Die Nahrung 25 (1); pp: 35-38) beschrieben.

Aus der Praxis des Kartoffel- und Zwiebelanbaus ergeben sich für ein geeignetes Keimhemmungsmittel vielfältige Anforderungen an die Verarbeitungseigenschaften: Wasserlösliche Keimhemmungsmittel können, wenn erforderlich, ohne besondere Maßnahmen in Wasser gelöst oder mit Wasser verdünnt werden. Überdies sollte das Mittel einfach zu applizieren sein. Einfache Applikationsmethoden umfassen das Tauchen, das Besprühen oder eine Sprühbenetzung oder Begasung beim Pflanzen der Kartoffeln oder Zwiebeln oder vor der Einlagerung. Vorteilhafterweise ist die Applikation weiterhin, im Gegensatz zu vielen bekannten Keimhemmungsmitteln, vom Wachstum und Reifegrad der Kartoffeln oder Zwiebeln sowie von den Witterungsbedingungen unabhängig.

Nicht zuletzt sollten Keimhemmungsmittel keine oder nur sehr geringe Rückstände auf oder in den behandelten Kartoffeln hinterlassen.

Daher besteht Bedarf an einem wirksamen Keimhemmungsmittel, welches einfach anzuwenden ist und ein verbessertes Rückstandsmanagement ermöglicht. Diese Aufgabe wird zumindest zum Teil durch die vorliegende Erfindung gelöst, die durch die angehängten Ansprüche charakterisiert wird.

Somit bezieht sich die vorliegende Erfindung in einer ersten Ausführungsform auf ein Verfahren zur Keimhemmung von Knollen einer Knollenpflanze oder von Zwiebeln, umfassend Aufbringen einer Lösung enthaltend mindestens 60% mindestens eines wasserlöslichen Alkohols auf mindestens eine Knolle oder Zwiebel.

Die in dieser Anmeldung beschriebenen bevorzugten Ausführungsformen können gleichermaßen auf das erfindungsgemäße Verfahren und die erfindungsgemäße Verwendung angewendet werden.

Im Zusammenhang mit der vorliegenden Erfindung wurde überraschend festgestellt, dass eine Lösung enthaltend mindestens 60% mindestens eines wasserlöslichen Alkohols die Keimung von Knollenpflanzen wie z.B. Kartoffeln, und von Zwiebeln wirksam und dauerhaft unter Lagerbedingungen hemmen kann. Überdies wurde festgestellt, dass die Behandlung mit der obigen Lösung die durch Lagerung bedingte Gewichtsreduktion im Vergleich zu unbehandelten Knollen oder Zwiebeln verringert wird.

Somit bezieht sich die vorliegende Erfindung in einer zweiten Ausführungsform auf Verfahren zur Verringerung der lagerbedingten Gewichtsreduktion bei Knollen einer Knollenpflanze oder bei Zwiebeln, umfassend Aufbringen einer Lösung enthaltend mindestens 60% mindestens eines wasserlöslichen Alkohols auf mindestens eine Knolle oder Zwiebel.

Über die oben beschriebenen Vorteile hinaus kann das erfindungsgemäße Verfahren unabhängig vom biologischen Alter der zu behandelnden Knollen oder Zwiebeln erfolgen, sogar nach Ablauf der Keimruhe und bei bereits vorhandenen Keimspitzen. Insgesamt ergibt sich eine Verbesserung der Lagereigenschaften von Knollen und Zwiebeln. Überdies ist die Handhabung einfach, da im einfachsten Fall getaucht, besprüht oder bedampft werden kann. Die Restmengen an auf den Knollen oder Zwiebeln eventuell verbleibendem Alkohol dürften in gesundheitlicher Hinsicht unbedenklich sein, was ein weiterer Vorteil gegenüber bekannten Keimhemmungsmitteln ist. Somit stellt das erfindungsgemäße Verfahren eine verbesserte und kostengünstigere Form der Keimhemmungsbehandlung dar.

Die Lösung enthält mindestens 60% mindestens eines wasserlöslichen Alkohols. Im Zusammenhang mit der vorliegenden Erfindung sind wasserlösliche Alkohole insbesondere solche ausgewählt aus der Gruppe bestehend aus Methanol, Ethanol, 1-Propanol und 2-Propanol. Die Lösung kann auch mehr als mindestens 60% mindestens eines wasserlöslichen Alkohols enthalten, so z.B. mindestens 70%, mindestens 75%, mindestens 80%, mindestens 85%, mindestens 90% oder sogar mindestens 95% sowie jeden nicht explizit genannten, im Bereich zwischen 60 und 100% liegenden prozentualen Anteil.

Über den Anteil mindestens eines wasserlöslichen Alkohols enthält die Lösung bevorzugt ausschließlich Wasser, optional falls notwendig Konservierungsmittel.

Die Lösung enthält bevorzugt mindestens 60% Ethanol, da die Handhabung von Ethanol leichter ist als diejenige von Methanol oder Propanolen und weil Ethanol weniger giftig ist als andere wasserlösliche Alkohole.

Die Lösung kann mehr als einen wasserlöslichen Alkohol enthalten. Beispielsweise kann die Lösung eine beliebige Mischung aus zwei wasserlöslichen Alkoholen enthalten, z.B. Ethanol und Methanol oder Ethanol und 1-Propanol oder 2-Propanol. In dieser Ausführungsform enthält die Lösung bevorzugt Ethanol und 2-Propanol, z.B. in Form von mit 2-Propanol vergälltem Ethanol. Je nach Landesvorschrift kann die Vergällung, sofern notwendig, zumindest mit 2-Propanol erfolgen, die resultierende Lösung jedoch auch weitere Vergällungsmittel enthalten.

Das Aufbringen oder in Kontakt Bringen der Lösung mit den Knollen oder Zwiebeln kann auf jegliche mögliche Art und Weise erfolgen. Beispielhaft seien Sprühen, Tauchen und Vernebelung bzw. Bedampfung genannt.

In einer bevorzugten Ausführungsform erfolgt das Aufbringen der Lösung mittels Tauchen, Besprühen oder Begasen.

Bei einer Sprühbehandlung wird die Knolle oder Zwiebel, insbesondere die Kartoffelknolle oder die Zwiebel eines Lauchgewächses, mit einer Lösung enthaltend mindestens 60% mindestens eines wasserlöslichen Alkohols besprüht. Hierbei werden mindestens 80%, weiter bevorzugt mindestens 90%, am meisten bevorzugt mindestens 95%, z.B. 96, 97, 98, 99 oder 100% der Oberfläche der Knolle oder Zwiebel eines Lauchgewächses beim Sprühvorgang benetzt. Als Richtwert kann ein Verhältnis von ausgebrachter Lösung in g zum Gewicht der Knolle oder Zwiebel in g von 0,4% bis 1,5%, bevorzugt von 0,5% bis 1%, z.B. 0,6%, 0,7%, 0,8% oder 0,9% gelten. Dieser Wert kann jedoch in Abhängigkeit von der Art der Knolle sowie den Umweltbedingungen bei der Pflanzung variieren.

Beim Tauchvorgang sollen mindestens 50%, bevorzugt mindestens 60%, mindestens 70% oder mindestens 80%, weiter bevorzugt mindestens 90% der Oberfläche der Knolle oder Zwiebel mit einer Lösung enthaltend mindestens 60% mindestens eines wasserlöslichen Alkohols benetzt werden. Hierbei beträgt die Eintauchzeit in die Lösung üblicherweise zwischen 4 und 20 Minuten, bevorzugt zwischen 5 und 15 Minuten, weiter bevorzugt zwischen 5 und 10 Minuten z.B. 6, 7, 8 oder 9 Minuten, kann jedoch je nach Knollen- oder Zwiebelart bzw. -sorte und Umweltbedingungen höher oder niedriger sein.

Ähnliches gilt für eine Sprühbehandlung, das heißt die Einwirkzeit der Lösung auf der Knolle oder Zwiebel bewegt sich bevorzugt ebenfalls im oben genannten Zeitrahmen.

In wiederum einer weiteren, besonders bevorzugten, Ausführungsform erfolgt das Aufbringen mittels Begasung durch Verdunstung. Hierzu wird die erfindungsgemäße Lösung in einem abgeschlossenen Raum zusammen mit den zu behandelnden Knollen oder Zwiebeln inkubiert. Die Inkubationszeit kann variieren und beträgt üblicherweise zwischen ca. 20 Minuten und 12 Stunden, bevorzugt zwischen 1 Stunde und 6 Stunden, z.B. 2, 3, 4 oder 5 Stunden oder jegliche Zeit zwischen diesen Werten, kann jedoch je nach Knollen- oder Zwiebelart bzw. -sorte und Umweltbedingungen auch höher oder niedriger sein. Zur Beschleunigung der Behandlung kann die erfindungsgemäße Lösung ggf. höher temperiert sein, um die Verdunstung zu begünstigen. Auch können die zu behandelnden Knollen oder Zwiebeln zum Erreichen dieser Wirkung höher temperiert sein.

Eine einmalige Behandlung durch Aufbringen oder in Kontakt Bringen ist bevorzugt, allerdings kann eine zweite oder sogar eine dritte Behandlung unter Umständen notwendig sein. Die Behandlung kann sowohl direkt nach der Ernte als auch wenige Tage oder Wochen danach erfolgen. Das erfindungsgemäße Verfahren zeigt auch bei bereits vorgekeimte Knollen oder Zwiebeln noch Wirkung.

Die vorliegende Lösung kann allein oder als eine von mehreren Behandlungen zur Keimhemmung verwendet werden, z.B. mit einem der bereits bekannten Mittel, wobei vorzugsweise die letzte Behandlung mit der vorliegenden Lösung erfolgt.

Geeignete Vorrichtungen und Verfahren zum Aufbringen der Lösung sind bekannt. Ein Beispiel ist in WO90/06059 beschrieben. Ein anderes geeignetes Verfahren wird in US8,178,145 offenbart.

In einer weiteren bevorzugten Ausführungsform der erfindungsgemäßen Verfahren ist die Knollenpflanze ausgewählt aus der Gruppe bestehend aus Kartoffel, Yams, Topinambur, Knollensellerie, Kohlrabi, Karotte, Pastinake, Petersilienwurzel, Rettich, Rote Beete, Schwarzwurzel, Speiserübe, Steckrübe, Kohlrübe, Süßkartoffel.

In einer anderen bevorzugten Ausführungsform ist die Zwiebel ausgewählt aus Lauchgewächsen, Gemüsefenchel, Traubenhyazinthen und essbarer Prärielilie. Lauchgewächse umfassen Küchenzwiebeln, Schalotten, Winterzwiebeln, Perlzwiebeln, Frühlingszwiebeln und Knoblauch.

Auch wenn die vorliegende Erfindung auch für Pflanzknollen oder -zwiebeln verwendet werden kann, ist die Knolle oder Zwiebel bevorzugt zum Verzehr bestimmt. Dies bedeutet, dass die Knolle oder Zwiebel bevorzugt keine zur Vermehrung verwendete Pflanzknolle oder -zwiebel ist.

Weiterhin bezieht sich die Erfindung auf die Verwendung einer Lösung enthaltend mindestens 60% mindestens eines wasserlöslichen Alkohols als Keimhemmungsmittel.

Die Lösung kann nötigenfalls Additive wie z.B. Konservierungsmittel enthalten. Alternativ kann sie zur Haltbarmachung auch ultrahocherhitzt werden.

Entsprechend bezieht sich die Erfindung auf die folgenden Punkte:
1. Verfahren zur Keimhemmung von Knollen einer Knollenpflanze oder von Zwiebeln, umfassend Aufbringen einer Lösung enthaltend mindestens 60% mindestens eines wasserlöslichen Alkohols auf mindestens eine Knolle oder Zwiebel.
2. Verfahren gemäß Punkt 1, wobei die Lösung mindestens 80% mindestens eines wasserlöslichen Alkohols enthält.
3. Verfahren gemäß einem der Punkte 1 und 2, wobei der mindestens eine niedere Alkohol ausgewählt ist aus der Gruppe bestehend aus Methanol, Ethanol, 1-Propanol und 2-Propanol.
4. Verfahren gemäß einem der Punkte 1 bis 3, wobei der mindestens eine niedere Alkohol Ethanol ist.
5. Verfahren gemäß Punkt 4, wobei der mindestens eine wasserlösliche Alkohol mit 2-Propanol vergälltes Ethanol ist.
6. Verfahren gemäß einem der Punkte 1 bis 3, wobei der mindestens eine niedere Alkohol Methanol ist.
7. Verfahren gemäß einem der Punkte 1 bis 6, dadurch gekennzeichnet, dass das Aufbringen der Lösung mittels Tauchen, Besprühen oder Begasung erfolgt.
8. Verfahren gemäß einem der Punkte 1 bis 7, wobei die Knollenpflanze ausgewählt ist aus der Gruppe bestehend aus Kartoffel, Yams, Topinambur, Knollensellerie, Kohlrabi, Karotte, Pastinake, Petersilienwurzel, Rettich, Rote Beete, Schwarzwurzel, Speiserübe, Steckrübe, Kohlrübe, Süßkartoffel.
9. Verfahren gemäß einem der Punkte 1 bis 7, wobei die Zwiebel ausgewählt ist aus der Gruppe bestehend aus Lauchgewächsen, wie Küchenzwiebel, Schalotte, Winterzwiebel, Perlzwiebel und Knoblauch; Gemüsefenchel, Traubenhyazinthen und Essbare Prärielilie.
10. Verfahren gemäß einem der Punkte 1 bis 9, wobei die Knolle oder Zwiebel zum Verzehr bestimmt ist.
11. Verwendung einer Lösung enthaltend mindestens 60% mindestens eines wasserlöslichen Alkohols als Keimhemmungsmittel.
12. Verwendung gemäß Punkt 11, wobei die Lösung mindestens 80% mindestens eines wasserlöslichen Alkohols enthält.
13. Verwendung gemäß einem der Punkte 11 und 12, wobei der mindestens eine niedere Alkohol ausgewählt ist aus der Gruppe bestehend aus Methanol, Ethanol, 1-Propanol und 2-Propanol.
14. Verwendung gemäß einem der Punkte 11 bis 13, wobei der mindestens eine niedere Alkohol Ethanol ist.
15. Verwendung gemäß einem der Punkte 11 bis 13, wobei der mindestens eine niedere Alkohol Methanol ist.
16. Verwendung gemäß einem der Punkte 11 bis 15, dadurch gekennzeichnet, dass das Aufbringen der Lösung mittels Tauchen, Besprühen oder Begasung erfolgt.
17. Verwendung gemäß einem der Punkte 11 bis 16, wobei die Knollenpflanze ausgewählt ist aus der Gruppe bestehend aus Kartoffel, Yams, Topinambur, Knollensellerie, Kohlrabi, Karotte, Pastinake, Petersilienwurzel, Rettich, Rote Beete, Schwarzwurzel, Speiserübe, Steckrübe, Kohlrübe, Süßkartoffel; und wobei die Zwiebel ausgewählt ist aus der Gruppe bestehend aus Lauchgewächsen wie Küchenzwiebel, Schalotte, Winterzwiebel, Perlzwiebel, Frühlingszwiebel und Knoblauch; Gemüsefenchel, Traubenhyazinthen und Essbare Prärielilie.
18. Verwendung gemäß einem der Punkte 11 bis 17, wobei die Knolle oder Zwiebel zum Verzehr bestimmt ist.

Die folgenden Beispiele illustrieren die Erfindung in nicht limitierender Form.

### Beispiel 1: Wirkung von wasserlöslichen Alkoholen auf die Keimung von Kartoffeln

### Versuchsdurchführung:

Je 10 Knollen Bio-Kartoffeln der Sorte Annabelle (Sortierung 28/35 mm) wurden durch Tauchen, 5 Minuten, wie folgt behandelt:

| | |
|---|---|
| Probe 1 A: | Leitungswasser |
| Probe 1 B: | Methanol (LiChrosolv® Reag. Ph Eur, Methanol, Reinheit (GC) > 99,9 %), |
| Probe 1 C: | Ethanol (LiChrosolv® Reag. Ph Eur, Ethanol, Reinheit (GC) > 99,9%), |
| Probe 1 D: | 2-Propanol (2-Propanol mind. 99 %, reinst) |

Die für die Proben verwendeten Kartoffelknollen hatten zum Zeitpunkt der Behandlung noch keine Keimspitzen / Keime.

Die Proben wurden nach der Behandlung und nach Abtropfen unter Lichteinwirkung bei 22°C ± 2 °C, 40 % ± 5 % rel. Feuchte gelagert. Nach 10 und 20 Tagen wurde die durchschnittliche Zahl der Keimspitzen / Keime pro Kartoffelknolle dokumentiert.

### Ergebnis:

**Tabelle 1: Wirkung von wasserlöslichen Alkoholen auf die Keimung von Kartoffeln**

| **Probe** | **Anzahl der Keimspitzen / Keime pro Knolle (ø)** | |
|---|---|---|
| | Nach 10 Tagen | Nach 20 Tagen |
| **1 A** | 4,6 Keimspitzen + Keime bis 2 mm | 2,7 Keime bis 10 mm |
| **1 B** | 0,2 nur sehr kleine Keimspitzen | 0,4 nur sehr kleine Keimspitzen |
| **1 C** | 0,4 nur sehr kleine Keimspitzen | 1,0 nur sehr kleine Keimspitzen |
| **1 D** | 1,8 nur sehr kleine Keimspitzen | 1,8 nur sehr kleine Keimspitzen |

Die Werte der Tabelle 1 belegen, dass die wasserlöslichen Alkohole eine signifikante Keimhemmung der Kartoffelknollen bewirken.

### Beispiel 2: Wirkung von Ethanol auf die Keimung von Speisekartoffeln in Abhängigkeit vom Alkoholanteil ethanolisch-wässriger Lösungen

### Versuchsdurchführung:

Bio-Speisekartoffeln (je 10 Knollen) der Sorte Annabelle wurden durch Tauchen 10 Minuten wie folgt behandelt:

| | |
|---|---|
| Probe 2 A: | Leitungswasser |
| Probe 2 B: | 100 vol.-% Ethanol |
| Probe 2 C: | 80 vol.-% Ethanol, 20 vol.-% Wasser |
| Probe 2 D: | 60 vol.-% Ethanol, 40 vol.-% Wasser |
| Probe 2 E: | 40 vol.-% Ethanol, 60 vol.-% Wasser |

Bei den für die Proben verwendeten Knollen handelte es sich um Kartoffeln aus der Vorjahresernte, die zum Zeitpunkt der Behandlung noch keine Keimspitzen / Keime hatten.

Für die Tauchlösungen wurden Ethanol, vergällt mit 1% MEK, 99 %, und Leitungswasser verwendet.

Die Proben wurden nach der Behandlung unter Lichteinwirkung bei 22°C ± 2 °C, 40 % ± 5 % rel. Feuchte gelagert. Nach 20 Tagen wurden die durchschnittliche Zahl der Keime und der durchschnittliche Gewichtsverlust, nach 32 Tagen die durchschnittliche Zahl der Keime, das durchschnittliche Gewicht der Keime und der durchschnittliche Gewichtsverlust pro Kartoffelknolle dokumentiert.

### Ergebnis:

**Tabelle 2a: Wirkung von wasserlöslichen Alkoholen auf die Keimung von Speisekartoffeln in Abhängigkeit vom Alkoholanteil alkoholisch-wässriger Lösungen**

| **Probe** | **Durchschnittswerte der Keime pro Knolle** | | | |
|---|---|---|---|---|
| | 20 Tage | 32 Tage | | |
| | Anzahl Keime | Anzahl Keime | Gewicht in g | Gewicht in % des Knollengewichts |
| 2A | 5,6 | 5,6 | 0,51 | 0,87 |
| 2B | 0 | 0,1 | 0,023 | 0,037 |
| 2C | 1,5 | 1,5 | 0,33 | 0,61 |
| 2D | 4,8 | 5,2 | 0,55 | 1,25 |
| 2E | 4,1 | 4,2 | 0,45 | 0,97 |

**Tabelle 2b: Gesichtsverlust der Knollen nach der Behandlung**

| Probe | Gewichtsverlust der Knollen in % | |
|---|---|---|
| | Nach 20 Tagen | nach 32 Tagen |
| 2A | 4,8 | 7,8 |
| 2B | 3,0 | 5,4 |
| 2C | 4,6 | 8,1 |
| 2D | 4,8 | 8,2 |
| 2E | 4,6 | 7,6 |

Die Werte der Tabelle 2a belegen, dass die Keimhemmung von Kartoffelknollen durch Ethanol vom Alkoholanteil alkoholisch-wässriger Lösungen abhängig ist. Bei 100 Vol. % Ethanol wird eine nahezu vollständige Keimhemmung erreicht. Aus einem zunehmenden Wasseranteil resultiert eine zunehmende Keimung. Bemerkenswert ist, dass der Gewichtsverlust der Kartoffelknollen durch eine Tauchbehandlung mit 100 % igem Ethanol signifikant reduziert wird (siehe Tabelle 2b).

### Beispiel 3: Wirkung von Ethanol auf die Keimung von Kartoffeln in Abhängigkeit von der Tauchzeit

### Versuchsdurchführung:

Kartoffeln (je 10 Knollen) der Sorte Annabelle wurden durch Tauchen in Ethanol, vergällt mit 1% MEK, 99 %, wie folgt behandelt:

| | |
|---|---|
| Probe 3 A: | keine Behandlung |
| Probe 3 B: | Tauchen, 5 Minuten |
| Probe 3 C: | Tauchen, 10 Minuten |
| Probe 3 D: | Tauchen, 15 Minuten |

Die für die Proben verwendeten Kartoffelknollen hatten zum Zeitpunkt der Behandlung noch keine Keimspitzen / Keime.

Die Proben wurden nach der Behandlung unter Lichteinwirkung bei 22°C ± 2 °C, 40 % ± 5 % rel. Feuchte gelagert. Nach 20 Tagen wurde der durchschnittliche Gewichtsverlust, nach 36 Tagen die durchschnittliche Zahl der Keime, das durchschnittliche Gewicht der Keime und der durchschnittliche Gewichtsverlust pro Kartoffelknolle dokumentiert.

### Ergebnis:

**Tabelle 3a: Wirkung von Ethanol auf die Keimung von Kartoffeln in Abhängigkeit von der Tauchzeit**

| **Probe** | **Durchschnittswerte der Keime pro Knolle nach 36 Tagen** | | |
|---|---|---|---|
| | Anzahl Keime | Gewicht in g | Gewicht in % des Knollengewichts |
| 3A | 4,2 | 0,28 | 1,49 |
| 3B | 0,3 | 0,03 | 0,2 |
| 3C | 0,2 | 0,05 | 0,31 |
| 3D | 0,3 | 0,07 | 0,39 |

**Tabelle 3b: Gewichtsverlust der Knollen nach der Behandlung**

| **Probe** | Gewichtsverlust der Knollen in % | |
|---|---|---|
| | Nach 20 Tagen | nach 36 Tagen |
| 3A | 10,1 | 18,6 |
| 3B | 7,1 | 14,2 |
| 3C | 6,5 | 14,0 |
| 3D | 6,3 | 12,3 |

Die Werte der Tabelle 3a belegen, dass bei Tauchzeiten von 5, 10 und 15 Minuten eine im Wesentlichen gleiche Keimhemmung von Kartoffeln durch Ethanol erreicht wird. Der Gewichtsverlust der Kartoffeln durch die Tauchbehandlung mit Ethanol wird wiederholt signifikant reduziert (siehe Tabelle 3b).

### Beispiel 4: Wirkung von Ethanol auf die Keimung von Speisekartoffeln in Abhängigkeit von der Tauchzeit

### Versuchsdurchführung:

Bio-Speisekartoffeln (je 10 Knollen) der Sorte Annabelle wurden durch Tauchen in Ethanol, vergällt mit 1% MEK, 99 %, wie folgt behandelt:

| | |
|---|---|
| Probe 4 A: | keine Behandlung |
| Probe 4 B: | kurzes Eintauchen |
| Probe 4 C: | Tauchen, 1 Minute |
| Probe 4 D: | Tauchen, 10 Minuten |

Bei den für die Proben verwendeten Knollen handelte es sich um Kartoffeln aus der Vorjahresernte, die zum Zeitpunkt der Behandlung noch keine Keimspitzen / Keime hatten.

Die Proben wurden nach der Behandlung unter Lichteinwirkung bei 22°C ± 2 °C, 40% ± 5 % rel. Feuchte gelagert. Nach 20 Tagen wurden die durchschnittliche Zahl der Keime und der durchschnittliche Gewichtsverlust, nach 36 Tagen die durchschnittliche Zahl der Keime, das durchschnittliche Gewicht der Keime und der durchschnittliche Gewichtsverlust pro Kartoffelknolle dokumentiert.

### Ergebnis:

Die Werte der Tabelle 4a belegen, dass das Ausmaß der Keimhemmung abhängig von der Tauchzeit ist. Auch in diesem Beispiel wird der Gewichtsverlust der Speisekartoffeln durch eine Tauchbehandlung mit Ethanol signifikant reduziert, wobei eine Tauchzeit von 1 und 10 Minuten gegenüber einem kurzem Eintauchen vorteilhaft ist (Tabelle 4b).

**Tabelle 4a: Wirkung von Ethanol auf die Keimung von Speisekartoffeln in Abhängigkeit von der Tauchzeit**

| **Probe** | **Durchschnittswerte der Keime pro Knolle** | | | |
|---|---|---|---|---|
| | 20 Tage | 32 Tage | | |
| | Anzahl Keime | Anzahl Keime | Gewicht in g | Gewicht in % des Knollengewichts |
| 4A | 5,1 | 6,2 | 0,61 | 0,96 |
| 4B | 4,1 | 5,4 | 0,46 | 1,21 |
| 4C | 1,6 | 2,5 | 0,34 | 0,81 |
| 4D | 0 | 0,1 | 0,023 | 0,037 |

**Tabelle 4b: Gewichtsverlust der Knollen nach Behandlung**

| **Probe** | **Gewichtsverlust der Knollen in %** | |
|---|---|---|
| | Nach 20 Tagen | nach 32 Tagen |
| 4A | 4,9 | 8,1 |
| 4B | 5,9 | 10,6 |
| 4C | 4,1 | 8,9 |
| 4D | 3,0 | 5,4 |

### Beispiel 5: Wirkung von Ethanol auf die Keimung der Speisekartoffelsorten Augsburger Gold, Linda und Violetta

### Versuchsdurchführung:

Bio-Speisekartoffeln der Sorte Augsburger Gold (je 8 Knollen), Linda (je 10 Knollen) und Violetta (je 7 Knollen) wurden durch Tauchen in Ethanol, vergällt mit 1% MEK, 99 %, 10 Minuten, behandelt.

Folgende Proben wurden geprüft:

| | |
|---|---|
| Probe 5 AG A: | Augsburger Gold, keine Behandlung |
| Probe 5 AG B: | Augsburger Gold, Ethanol Behandlung |

| | |
|---|---|
| Probe 5 LI A: | Linda, keine Behandlung |
| Probe 5 Li B: | Linda, Ethanol Behandlung |

| | |
|---|---|
| Probe 5 Vi A: | Violetta, keine Behandlung |
| Probe 5 Vi B: | Violetta, Ethanol Behandlung |

Bei den für die Proben verwendeten Knollen handelte es sich um Kartoffeln aus der Vorjahresernte, die zum Zeitpunkt der Behandlung noch keine Keimspitzen / Keime hatten.

Die Proben wurden nach der Behandlung unter Lichteinwirkung bei 22°C ± 2 °C, 40% ± 5 % rel. Feuchte gelagert. Nach 18 Tagen wurden die durchschnittliche Zahl der Keime und der durchschnittliche Gewichtsverlust, nach 37 Tagen die durchschnittliche Zahl der Keime, das durchschnittliche Gewicht der Keime und der durchschnittliche Gewichtsverlust pro Kartoffelknolle dokumentiert.

### Ergebnis:

**Tabelle 5a: Wirkung von Ethanol auf die Keimung der Speisekartoffelsorten Augsburger Gold, Linda und Violetta**

| **Probe** | **Durchschnittswerte der Keime pro Knolle** | | | |
|---|---|---|---|---|
| | 18 Tage | 37 Tage | | |
| | Anzahl Keime | Anzahl Keime | Gewicht in g | Gewicht in % des Knollengewichts |
| 5 AG A | 5,4 | 5,6 | 1,62 | 2,94 |
| 5 AG B | 0,1 | 1,0 | 0,44 | 0,75 |
| 5 Li A | 4,4 | 4,5 | 0,68 | 1,24 |
| 5 Li B | 0,3 | 1 | 0,28 | 0,55 |
| 5 Vi A | 5,1 | 5,6 | 3,04 | 4,58 |
| 5 Vi B | 2,7 | 2,7 | 2,76 | 4,43 |

**Tabelle 5b: Gewichtsverlust der Knollen nach der Behandlung**

| Probe | Gewichtsverlust der Knollen in % | |
|---|---|---|
| | Nach 18 Tagen | nach 37 Tagen |
| 5 AG A | 5,8 | 11,7 |
| 5 AG B | 2,8 | 6,0 |
| 5 Li A | 2,6 | 5,7 |
| 5 Li B | 2,7 | 5,5 |
| 5 Vi A | 7,2 | 14,8 |
| 5 Vi B | 4,4 | 12,7 |

Die Werte in der Tabelle 5a belegen eine signifikante Keimhemmung der Speisekartoffelsorten Augsburger Gold, Linda und Violetta, allerdings in unterschiedlicher Ausprägung. Mit Ausnahme der Sorte Linda ist auch eine Reduzierung des Gewichtsverlustes zu verzeichnen (Tabelle 5b).

### Beispiel 6: Wirkung von Ethanol auf die Keimung von frisch geernteten Speisekartoffeln der Sorte Annabelle

### Versuchsdurchführung:

Speisekartoffeln der Sorte Annabelle (neue Ernte, je 10 Knollen) wurden durch Tauchen in Ethanol, vergällt mit 1% MEK, 99 %, 15 Minuten, behandelt.

Folgende Proben wurden geprüft:

| | |
|---|---|
| Probe 6 A: | keine Behandlung |
| Probe 6 B: | Ethanol Behandlung |

Bei den für die Proben verwendeten Knollen handelte es sich um Kartoffeln aus neuer Ernte, die zum Zeitpunkt der Behandlung keine Keimspitzen / Keime hatten.

Die Proben wurden nach der Behandlung unter Lichteinwirkung bei 22°C ± 2 °C, 40% ± 5 % rel. Feuchte gelagert. Nach 34 Tagen wurden die durchschnittliche Zahl und das durchschnittliche Gewicht der Keime pro Kartoffelknolle dokumentiert.

### Ergebnis:

**Tabelle 6: Wirkung von Ethanol auf die Keimung von frisch geernteten Speisekartoffeln der Sorte Annabelle**

| **Probe** | **Durchschnittswerte der Keime pro Knolle nach 32 Tagen** | | |
|---|---|---|---|
| | Anzahl Keime | Gewicht in g | Gewicht in % des Knollengewichts |
| 6A | 3,4 | 0,24 | 0,42 |
| 6B | 0 | 0 | 0 |

Die Werte der Tabelle 6 belegen, dass ein 15-minütiges Tauchen in Ethanol eine Keimhemmung bei frisch geernteten Kartoffelknollen der Sorte Annabelle bewirkt.

### Beispiel 7: Wirkung von Ethanol auf die Keimung der Speisekartoffelsorten Belana und Ivetta

### Versuchsdurchführung:

Speisekartoffeln der Sorten Belana (je 10 Knollen) und Ivetta (je 8 Knollen) wurden durch Tauchen in Ethanol, vergällt mit 1% MEK, 99 %, 15 Minuten, behandelt.

Folgende Proben wurden geprüft:

| | |
|---|---|
| Probe 7 Be A: | Belana, keine Behandlung |
| Probe 7 Be B: | Belana, Ethanol Behandlung |

| | |
|---|---|
| Probe 7 Iv A: | Ivetta, keine Behandlung |
| Probe 7 Iv B: | Ivetta, Ethanol Behandlung |

Bei den für die Proben verwendeten Knollen handelte es sich um Kartoffeln aus der Vorjahresernte, die zum Zeitpunkt der Behandlung noch keine Keimspitzen / Keime hatten. Die Proben wurden nach der Behandlung unter Lichteinwirkung bei 22°C ± 2 °C, 40% ± 5 % rel. Feuchte gelagert. Wie in Tabellen 7a und 7b angegeben, wurden die durchschnittliche Zahl der Keime und der durchschnittliche Gewichtsverlust, und später die durchschnittliche Zahl der Keime, das durchschnittliche Gewicht der Keime und der durchschnittliche Gewichtsverlust pro Kartoffelknolle dokumentiert.

### Ergebnis:

Die Werte in der Tabelle 7a belegen eine signifikante Keimhemmung der Speisekartoffelsorten Belana und Ivetta, allerdings in unterschiedlicher Ausprägung. Zudem ist bei beiden Sorten eine Reduzierung des Gewichtsverlustes zu verzeichnen (Tabelle 7b).

**Tabelle 7: Wirkung von Ethanol auf die Keimung der Speisekartoffelsorten Belana und Ivetta**

| Probe | **Durchschnittswerte der Keimspitzen / Keime pro Knolle** | | | | |
|---|---|---|---|---|---|
| | 10 Tage | 20 Tage | 26 Tage | | |
| | Anzahl Keimspitzen | Anzahl Keime | Anzahl Keime | Gewicht in g | Gewicht in % des Knollengewichts |
| **7 Be A** | 5,5 | 4,4 | 4,7 | 0,33 | 0,53 |
| **7 Be B** | 2,1 | 2,2 | 4,4 | 0,19 | 0,26 |
| **7 Iv A** | 4,0 | 4,5 | 5,4 | 0,94 | 1,32 |
| **7 Iv B** | 0,0 | 1,2 | 3,7 | 0,4 | 0,53 |

**Tabelle 7b: Gewichtsverlust der Knollen nach Behandlung**

| Probe | Durchschnittlicher Gewichtsverlust der Knollen in % |
|---|---|
| **7 Be A** | 6,0 |
| **7 Be B** | 4,9 |
| **7 Iv A** | 6,1 |
| **7 Iv B** | 4,1 |

### Beispiel 8: Wirkung von Ethanol auf die Keimung der Speisekartoffelsorten Amanda, Belana und Milva in Abhängigkeit von den Lagerbedingungen

### Versuchsdurchführung:

Speisekartoffeln der Sorten Amanda, Belana und Milva wurden in einer Menge von ca. 5.000 g durch Tauchen, 10 Minuten, in Ethanol, vergällt mit 1 % MEK, 99 %, behandelt. Die Proben wurden für eine Lagerung sowohl in einem temperierten Raum (tR) als auch für eine praxisnahe Lagerung in einer Kartoffelscheune (Sc) wie folgt geteilt und geprüft:

### Amanda:

| | | | |
|---|---|---|---|
| unbehandelt: | | | |
| temp. Raum: | 654,37 g (Am tR A) | Scheune: | 4.750 g (Am Sc A) |
| behandelt: | | | |
| temp. Raum: | 634,88 g (Am tR B) | Scheune: | 4.800 g (Am Sc B) |

### Belana:

| | | | |
|---|---|---|---|
| unbehandelt: | | | |
| temp. Raum: | 406,14 g (Be tR A) | Scheune: | 4.760 g (Be Sc A) |
| behandelt: | | | |
| temp. Raum: | 581,12 g (Be tR B) | Scheune: | 4.505 g (Be Sc B) |

### Milva:

| | | | |
|---|---|---|---|
| unbehandelt: | | | |
| temp. Raum: | 617,06g (Mi tR A) | Scheune: | 4.640 g (Mi Sc A) |
| behandelt: | | | |
| temp. Raum: | 675,96 g (Mi tR B) | Scheune: | 4.350 g (Mi Sc B) |

Bei den für die Proben verwendeten Knollen handelte es sich um Kartoffeln aus der Vorjahresernte, die in einer Kartoffelscheune gelagert wurden. Zum Zeitpunkt der Behandlung hatten die Knollen bereits vereinzelt Keimspitzen / Keime. Diese wurden vor der Behandlung entfernt.

Die kleineren Proben wurden nach der Behandlung unter Lichteinwirkung bei 22°C ± 2 °C, 40 % ± 5 % rel. Feuchte gelagert. Die größeren Proben wurden, abgefüllt in Netz-Säcke und eingelegt in Kunststoffkisten, in einer dunklen Kartoffelscheune bei Temperaturen zwischen 13 °C bis 17 °C gelagert. Wie in den Tabellen angegeben wurden bei den Proben der Grad der Keimung und die Gewichte dokumentiert.

### Ergebnis:

Die Werte in Tabelle 8a und 8c belegen zunächst einmal, dass ein 10-minütiges Tauchen in Ethanol eine signifikante Keimhemmung aller geprüften Sorten bewirkt. Der Gewichtsverlust der behandelten und der unbehandelten Knollen aller Sorten ist in der Scheune verglichen mit den Verlusten im temperierten Raum deutlich geringer, im Verhältnis von behandelt zu unbehandelt bei Amanda mit ca. 51 % zu 59% , bei Belana mit 44% zu 40 % jeweils auf vergleichbarem Niveau und bei Milva mit 18% zu 6% deutlich über dem Wert des temperierten Raumes (Tabelle 8b).

**Tabelle 8a: Wirkung von Ethanol auf die Keimung der Speisekartoffelsorten Amanda, Belana und Milva bei Lagerung in einem temperierten Raum**

| **Probe** | **Durchschnittswerte der Keime pro Knolle** | | | |
|---|---|---|---|---|
| | 12 Tage | 34 Tage | | |
| | Anzahl Keime | Anzahl Keime | Gewicht in g | Gewicht in % des Knollengewichts |
| **8 Am tR A** | 2,4 | 2,6 | 1,18 | 2,03 |
| **8 Am tR B** | 0 | 0,2 | 0,05 | 0,08 |
| **8 Be tR A** | 2,2 | 2,6 | 0,52 | 1,44 |
| **8 Be tR B** | 0 | 0,1 | 0,03 | 0,06 |
| **8 Mi tR A *** | 3,2 | 3,2 | 0,99 | 1,82 |
| **8 Mi tR B *** | 0 | 0 | - | - |

| | | | | |
|---|---|---|---|---|
| *: Auswertung nach 33 Tagen | | | | |

**Tabelle 8b: Gewichtsverlust der Knollen nach der Behandlung**

| Probe | Gewichtsverlust der Knollen in % | |
|---|---|---|
| | Nach 20 Tagen | nach 34 Tagen |
| **8 Am tR A** | 2,8 | 10,9 |
| **8 Am tR B** | 1,8 | 4,5 |
| **8 Be tR A** | 4,1 | 11,3 |
| **8 Be tR B** | 2,7 | 6,8 |
| **8 Mi tR A*** | 3,5 | 11,7 |
| **8 Mi tR B*** | 3,4 | 11,0 |

| | | |
|---|---|---|
| *: Auswertung nach 33 Tagen | | |

**Tabelle 8c: Wirkung von Ethanol auf die Keimung der Speisekartoffelsorten Amanda, Belana und Milva bei Lagerung in einer Kartoffelscheune**

| Probe | **Keimungsgrad der Knollen nach 59 Tagen** | Durchschnittlicher Gewichtsverlust der Knollen in % | | |
|---|---|---|---|---|
| | | Nach 31 | 45 | 59 Tagen |
| **8 Am Sc A** | Sehr stark gekeimt | 2,42 | 4,84 | 7,58 |
| **8 Am Sc B** | vereinzelte kleine Keime | 1,04 | 1,66 | 3,75 |
| **8 Be Sc A** | Sehr stark gekeimt | 1,36 | 3,78 | 6,62 |
| **8 Be Sc B** | sehr vereinzelt kleine Keime | 0,33 | 1,89 | 3,66 |
| **8 Mi Sc A** | Sehr stark gekeimt | 1,72 | 3,99 | 6,68 |
| **8 Mi Sc B** | Keine Keime | 1,03 | 2,64 | 5,51 |

### Beispiel 9: Wirkung von Ethanol auf die Keimung der Speisekartoffelsorte Annabelle bei einer Dampfbehandlung

### Versuchsdurchführung:

Die Behandlung von Bio-Speisekartoffeln (je 10 Knollen) der Sorte Annabelle erfolgte durch Einwirkung von Ethanol-Dampf. Hierzu wurden die Knollen in einem Exsikkator auf den Porzellan-Einsatz aufgelegt. Der mit Ethanol, vergällt mit 1% MEK, 99 %, beschickte Exsikkator wurde verschlossen und danach mittels Wasserstrahlpumpe evakuiert. Nach 18 Stunden wurden die Knollen entnommen, die durch Kondensation von Ethanoldampf feucht waren. Während der Standzeit erfolgte durch das Verdampfen des Ethanols ein Druckausgleich, so dass der Exsikkator zum Öffnen nicht belüftet werden musste.

### Folgende Proben wurden geprüft:

| | |
|---|---|
| Probe 9 A: | keine Behandlung |
| Probe 9 B: | Einwirkung von Ethanol-Dampf, 18 Stunden |

Bei den für die Proben verwendeten Knollen handelte es sich um Kartoffeln aus der Vorjahresernte, die zum Zeitpunkt der Behandlung noch keine Keimspitzen / Keime hatten.

Die Proben wurden nach der Behandlung unter Lichteinwirkung bei 22°C ± 2 °C, 40% ± 5 % rel. Feuchte gelagert. Nach 20 Tagen wurden die durchschnittliche Zahl der Keime, nach 32 Tagen die durchschnittliche Zahl der Keime und das durchschnittliche Gewicht der Keime dokumentiert.

### Ergebnis:

Die Werte der Tabelle 9 belegen, dass die 18-stündige Einwirkung von Ethanol-Dampf eine vollständige Keimhemmung der Speisekartoffeln bewirkt.

**Tabelle 9: Wirkung von Ethanol auf die Keimung der Speisekartoffelsorte Annabelle bei einer Dampfbehandlung**

| **Probe** | **Durchschnittswerte der Keime pro Knolle** | | | |
|---|---|---|---|---|
| | 20 Tage | 32 Tage | | |
| | Anzahl Keime | Anzahl Keime | Gewicht in g | Gewicht in % des Knollengewichts |
| **10 A** | 5,1 | 6,2 | 0,61 | 0,96 |
| **10 B** | 0 | 0 | 0 | 0 |

### Beispiel 10: Wirkung von Ethanol auf die Keimung der Speisekartoffelsorten Amanda, Belana und Milva bei einer Dampfbehandlung

### Versuchsdurchführung:

Speisekartoffeln (je 10 Knollen) der Sorten Amanda, Belana und Milva wurden durch die Einwirkung von Ethanol-Dampf behandelt. Hierzu wurden die Knollen in einem Exsikkator auf den Porzellan-Einsatz aufgelegt. Der mit Ethanol, vergällt mit 1% MEK, 99 %, beschickte Exsikkator wurde verschlossen und danach mittels Wasserstrahlpumpe evakuiert. Wie angegeben wurden die an der Oberfläche trockenen Knollen nach 1, 2, 3 und 5 Stunden entnommen. Während einer Standzeit von bis zu 3 Stunden erfolgte durch das Verdampfen des Ethanols kein Druckausgleich, so dass der Exsikkator zum Öffnen belüftet werden musste. Bei einer Standzeit von 5 Stunden war auf Grund eines Druckausgleichs eine Belüftung nicht erforderlich.

### Folgende Proben wurden geprüft:

| | |
|---|---|
| Probe 10 Am A | Einwirkung von Ethanol-Dampf, 1 Stunde |
| Probe 10 Am B | Einwirkung von Ethanol-Dampf, 2 Stunden |
| Probe 10 Am C | Einwirkung von Ethanol-Dampf, 3 Stunden |

| | |
|---|---|
| Probe 10 Be A | Einwirkung von Ethanol-Dampf, 1 Stunde |
| Probe 10 Be B | Einwirkung von Ethanol-Dampf, 3 Stunde |

| | |
|---|---|
| Probe 10 Mi A | Einwirkung von Ethanol-Dampf, 1 Stunde |
| Probe 10 Mi B | Einwirkung von Ethanol-Dampf, 5 Stunde |

Bei den für die Proben verwendeten Knollen handelte es sich um Kartoffeln aus der Vorjahresernte, die zum Zeitpunkt der Behandlung vereinzelt Keimspitzen / Keime hatten. Diese wurden vor der Behandlung entfernt.

Die Proben wurden nach der Behandlung unter Lichteinwirkung bei 22°C ± 2 °C, 40% ± 5 % rel. Feuchte gelagert. Die durchschnittliche Zahl der Keime, das durchschnittliche

Gewicht der Keime und der durchschnittliche Gewichtsverlust pro Kartoffelknolle wurden dokumentiert.

### Ergebnis:

Die Werte der Tabelle 10a belegen, dass die 3-stündige bzw. 5-stündige Einwirkung von Ethanol-Dampf eine nahezu vollständige Keimhemmung aller geprüften Sorten bewirkt. Der durchschnittliche Gewichtsverlust bei Amanda liegt bei einer 1-,2- und 3-stündigen Einwirkung nach 8, 17 und 29 Tagen liegt auf annähernd gleichem Niveau (Tabelle 10b). Gegenüber einer vergleichbaren unbehandelte Probe (10,9 % nach 34 Tagen) sind diese Verluste aber geringer.

Der durchschnittliche Gewichtsverlust bei Belana liegt bei einer 1- und 3-stündigen Einwirkung auf gleichem Niveau. Gegenüber einer vergleichbaren unbehandelte Probe (ca. 8,5 %) ist dieser Verlust geringer.

Der durchschnittliche Gewichtsverlust bei Milva liegt bei einer 1- und 5-stündigen Einwirkung auf gleichem Niveau. Gegenüber einer vergleichbaren unbehandelte Probe (33 Tage 11,0 %) ist dieser Verlust nur geringfügig geringer.

**Tabelle 10a: Wirkung von Ethanol auf die Keimung der Speisekartoffelsorten Amanda, Belana und Milva bei einer Ethanol-Dampf Behandlung**

| **Probe** | **Durchschnittswerte der Keime pro Knolle nach (X) Tagen** | | |
|---|---|---|---|
| | Anzahl Keime | Gewicht in g | Gewicht in % des Knollengewichts |
| **10 Am A (29)** | 1,4 | 0,42 | 0,66 |
| **10 Am B (29)** | 0,6 | 0,13 | 0,24 |
| **10 Am C (29)** | 0,2 | 0,03 | 0,07 |
| **10 Be A (26)** | 4,5 | 0,07 | 0,16 |
| **10 BE B (26)** | 0 | 0 | 0 |
| **10 Mi A (31)** | 1,0 | 0,18 | 0,34 |
| **10 Mi B (31)** | 0 | 0 | 0 |

**Tabelle 10b: Gewichtsverlust der Knollen nach der Behandlung**

| **Probe** | Gewichtsverlust der Knollen in % | | |
|---|---|---|---|
| | nach (X)* Tagen | nach (X)* Tagen | nach (X)* Tagen |
| **10 Am A** | 0,97 (8) | 2,6 (17) | 5,7 (29) |
| **10 Am B** | 0,98 (8) | 2,6 (17) | 5,1 (29) |
| **10 Am C** | 1,47 (8) | 3,3 (17) | 5,5 (29) |
| **10 Be A** | 0,95 (5) | 3,0 (14) | 5,9 (26) |
| **10 Be B** | 0,90 (5) | 3,0 (14) | 5,4 (26) |
| **10 Mi A** | 3,0 (10) | 5,7 (19) | 9,3 (31) |
| **10 Mi B** | 3,0 (10) | 5,7 (19) | 9,3 (31) |

| | | | |
|---|---|---|---|
| *: Anzahl der Tage steht hinter dem Wert in Klammern | | | |

### Beispiel 11: Wirkung von wasserlöslichen Alkoholen auf die Keimung von Speisezwiebeln

### Versuchsdurchführung:

Je 10 Speisezwiebeln wurden durch 10 minütiges Tauchen wie folgt behandelt:

| | |
|---|---|
| Probe 11 A: | Leitungswasser |
| Probe 11 B: | Ethanol (LiChrosolv® Reag. Ph Eur, Ethanol, Reinheit (GC) > 99,9%) |
| Probe 11 C: | 2-Propanol (2-Propanol mind. 99 %, reinst) |

Die für die Proben verwendeten Zwiebeln hatten zum Zeitpunkt der Behandlung noch keine Keimspitzen / Keime. Die Proben wurden nach der Behandlung und nach Abtropfen in Papiertüten unter Lichtausschluss bei Temperaturen zwischen 12°C und 24°C gelagert. Nach 63 Tagen wurde die Keimung der Zwiebeln dokumentiert.

### Ergebnis:

**Tabelle 11: Wirkung von wasserlöslichen Alkoholen auf die Keimung von Speisezwiebeln**

| Probe | Anzahl der Zwiebeln | | |
|---|---|---|---|
| | ohne Keime | mit kurzen Keimen | mit langen Keimen |
| 11 A | 4 | | 6 |
| 11 B | 6 | 4 | |
| 11 C | 4 | 4 | 2 |

Die Werte der Tabelle 11 belegen, dass wasserlösliche Alkohole eine Keimhemmung von Speisezwiebeln bewirken.

## Patentansprüche

1. Verfahren zur Keimhemmung von Knollen einer Knollenpflanze oder von Zwiebeln, umfassend Aufbringen einer Lösung enthaltend mindestens 60% mindestens eines wasserlöslichen Alkohols auf mindestens eine Knolle oder Zwiebel.

2. Verfahren gemäß Anspruch 1, wobei die Lösung mindestens 80% mindestens eines wasserlöslichen Alkohols enthält.

3. Verfahren gemäß einem der Ansprüche 1 und 2, wobei der mindestens eine niedere Alkohol ausgewählt ist aus der Gruppe bestehend aus Methanol, Ethanol, 1-Propanol und 2-Propanol.

4. Verfahren gemäß einem der Ansprüche 1 bis 3, wobei der mindestens eine niedere Alkohol Ethanol ist.

5. Verfahren gemäß Anspruch 4, wobei der mindestens eine wasserlösliche Alkohol mit mindestens 2-Propanol vergälltes Ethanol ist.

6. Verfahren gemäß einem der Ansprüche 1 bis 3, wobei der mindestens eine niedere Alkohol Methanol ist.

7. Verfahren gemäß einem der Ansprüche 1 bis 6, **dadurch gekennzeichnet, dass** das Aufbringen der Lösung mittels Tauchen, Besprühen oder Begasung erfolgt.

8. Verfahren gemäß einem der Ansprüche 1 bis 7, wobei die Knollenpflanze ausgewählt ist aus der Gruppe bestehend aus Kartoffel, Yams, Topinambur, Knollensellerie, Kohlrabi, Karotte, Pastinake, Petersilienwurzel, Rettich, Rote Beete, Schwarzwurzel, Speiserübe, Steckrübe, Kohlrübe, Süßkartoffel; oder wobei die Zwiebel ausgewählt ist aus der Gruppe bestehend aus Lauchgewächsen, Gemüsefenchel, Traubenhyazinthen und Essbare Prärielilie.

9. Verfahren gemäß einem der Ansprüche 1 bis 8, wobei die Knolle oder Zwiebel zum Verzehr bestimmt ist.

10. Verwendung einer Lösung enthaltend mindestens 60% mindestens eines wasserlöslichen Alkohols als Keimhemmungsmittel.

11. Verwendung gemäß einem der Ansprüche 9 und 10, wobei der mindestens eine niedere Alkohol ausgewählt ist aus der Gruppe bestehend aus Methanol, Ethanol, 1-Propanol und 2-Propanol.

12. Verwendung gemäß einem der Ansprüche 9 bis 11, wobei der mindestens eine niedere Alkohol Ethanol ist.

13. Verwendung gemäß einem der Ansprüche 9 bis 12, wobei der mindestens eine niedere Alkohol Methanol ist.

14. Verwendung gemäß einem der Ansprüche 9 bis 12, **dadurch gekennzeichnet, dass** das Aufbringen der Lösung mittels Tauchen, Besprühen oder Begasung erfolgt.

15. Verwendung gemäß einem der Ansprüche 9 bis 14, wobei die Knollenpflanze ausgewählt ist aus der Gruppe bestehend aus Kartoffel, Yams, Topinambur, Knollensellerie, Kohlrabi, Karotte, Pastinake, Petersilienwurzel, Rettich, Rote Beete, Schwarzwurzel, Speiserübe, Steckrübe, Kohlrübe, Süßkartoffel; und wobei die Zwiebel ausgewählt ist aus der Gruppe bestehend aus Lauchgewächsen, Gemüsefenchel, Traubenhyazinthen und Essbare Prärielilie.
